# EUROPEAN PATENT APPLICATION

(11) **EP 1 609 551 A1**
(43) Date of publication of application: **28.12.2005**
(21) Application number: 05010600.4
(22) Date of filing: 17.05.2005
(51) Int. Cl.: B23B 51/04

(54) **Support pads for drill heads**

(30) Priority: 21.06.2004 SE 0401597
(71) Applicant: Sandvik Intellectual Property AB, 811 81 Sandviken (SE)
(72) Inventor: Hessman, Ingwar, 811 54 Sandviken (SE)
(74) Representative: Taquist, Henrik Lennart Emanuel

(57) **Abstract**

The present invention relates to a drill head comprising one or more support pads (2,3). According to the invention at least one support pad (2,3) is made of a ceramic material. Such a support pad (2,3) is particularly useful when drilling in heat resistant materials such as Inconel 718, Inconel 939, Waspaloy, Udimet 720 etc.

## Description

The present invention relates to support pads for drill heads in particular for long hole drilling in heat resistant steel materials. According to the invention the pads are made of ceramic materials.

Drilling in metals is generally divided in two types: long hole drilling and short hole drilling. Short hole drilling means generally drilling to a depth of up to 3-5 times the drill diameter. Long hole drilling means generally drilling to many more times the drill diameter.

With short hole drilling the demands are not as great and therefore simple helix drills either of solid cemented carbide or as solid tool steel or of tool steel equipped with cemented carbide inserts are used.

Long hole drilling, however, puts large demands on good chipbreaking, lubrication, cooling and not at least chip transport. This is achieved through specially developed drilling systems with specially designed drill heads connected to a drill rod and which fulfills the above mentioned requirements. The drilling head may be of solid cemented carbide but is generally of tool steel or cast steel, provided with a number of insert of cemented carbide placed in such a way that they together form the desired cutting edge. Such long hole drills are known in the art.

The design of the long hole drilling head is such that the cutting forces are not balanced. Therefore in order to absorb the resulting radial cutting forces the drilling head is generally provided with support pads mechanically clamped to the head to support and guide the head during the operation. Inserts and support pads are generally made in cemented carbide with different contents of WC, Co and cubic carbides TiC, TaC, NbC depending on the application. The support pads are, in addition, often coated with one or more wear resistant layers. Generally the support pads are coated with a yellow layer of TiN or WC/C+TiAlN.

However, when machining heat resistant superalloys such as Inconel 718,Inconel 939, Waspaloy, Udimet 720 etc support pads in coated cemented carbide tend to become covered with a network of small cracks which leads to rapid wear and too frequent change of support pads.

In EP 0713747, the use of a coated ceramic guide member for a reamer is disclosed. The coating is boron nitride or diamond. A similar reamer with a guide strip which contains aluminum oxide and titanium carbide is disclosed in EP 0410342. Reamers are used for finishing of pre-formed holes and are not subjected to the same type of forces as drills for long hole drilling.

It is therefore an object to provide a support pad which is strong and durable particularly when drilling in heat resistant materials.

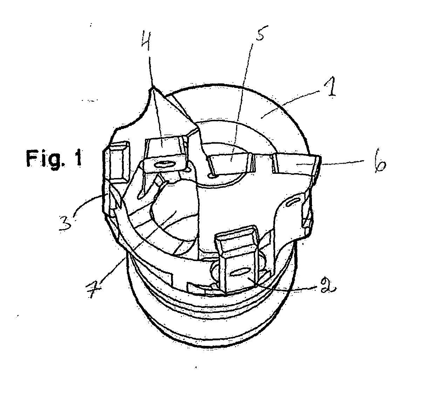

FIG. 1 is a perspective view of an example of a drilling head provided with support pads in which
1 - drilling head of the ejector type
2 and 3 - support pads
4 - central cutting insert
5 - intermediate cutting insert
6 - peripheral cutting insert
7 - internal cooling channel

As can be seen in Fig 1, the cutting inserts 4, 5 and 6 are clamped or brazed in the drill head. The peripheral insert 6 forms the diameter of the hole in the workpiece that is machined. The central insert 4 overlaps the central axis of the drill, as no remaining core is desired. During rotation, the orbit of the cutting edge of the intermediate insert 5 overlaps with the cutting edges of both the peripheral insert 5 and the intermediate insert 6 to thereby obtain a continuous cutting line from the central axis to the periphery.

In the usual manner the drill head 1 is provided with an interior central channel 16, through which the major part of the chips are expelled.

According to the present invention there is provided a drill head with at least one support pad of a ceramic material wherein the pad includes a base body with a bottom surface, at least one side surface and a top surface. In a preferred embodiment the support pad is 180° indexable.

In a first embodiment the ceramic material is essentially ceramic oxides or ceramic oxides mixed with hard carbides and/or nitrides and/or borides and/or binder metal and conventional pressing and/or sintering aids. In a preferred embodiment the ceramic material is oxide based preferably consisting essentially of Al₂O₃ and/or ZrO₂.

In a second embodiment the ceramic material is nitride based containing conventional pressing and/or sintering aids. In a preferred embodiment the nitride based material consists essentially of Si₃N₄ and intergranular phase. In another preferred embodiment the ceramic material consists of α- and/or β-sialon and intergranular phase.

In a third embodiment the ceramic material further contains whisker and/or platelets, preferably of SiC.

The support pads according to the invention can be provided with a wear resistant coating as known in the art.

The invention also relates to the use of a drill head provided with at least one support pad of a ceramic material for drilling in heat resistant materials such as Inconel 718, Inconel 939, Waspaloy, Udimet 720 etc.

## Claims

1. Drill head comprising one or more support pads
**characterized in that** at least one support pad is made of a ceramic material.

2. Drill head according to claim 1 **characterized in that** said ceramic material is essentially ceramic oxides or ceramic oxides mixed with hard carbides and/or nitrides and/or borides and/or binder metal and conventional pressing and/or sintering aids.

3. Drill head according to claim 2 **characterized in that** said ceramic material is oxide based.

4. Drill head according to claim 3 **characterized in that** said ceramic material consists essentially of Al₂O₃ and/or Zr02.

5. Drill head according to claim 1 **characterized in that** said ceramic martial is nitride based containing conventional pressing and/or sintering aids.

6. Drill head according to claim 5 **characterized in that** said nitride based material consists essentially of Si₃N₄.

7. Drill head according to claim 5 **characterized in that** said ceramic material consists of α- and/or β-sialon, intergranular phase.

8. Drill head according to any of the preceding claims
**characterized in that** said ceramic material further contains whisker and/or platelets, preferably of SiC.

9. Drill head according to any of the preceding claims
**characterized in that** said support pads are provided with a wear resistant coating.

10. Use of a drill head according to any of the preceding claims for drilling in heat resistant materials such as Inconel 718, Inconel 939, Waspaloy, Udimet 720 etc.
